# EUROPÄISCHE PATENTSCHRIFT

(11) **EP 2 986 484 B1**
(45) Veröffentlichungstag und Bekanntmachung des Hinweises auf die Patenterteilung: **06.05.2020**
(21) Anmeldenummer: 14716746.4
(22) Anmeldetag: 17.03.2014
(51) Int. Cl.: B62B 5/00, B62B 3/06

(54) **VORRICHTUNG ZUM HEBEN UND VERSCHIEBEN VON OBJEKTEN**
DEVICE FOR LIFTING AND MOVING OBJECTS
DISPOSITIF POUR LEVER ET DÉPLACER DES OBJETS

(30) Priorität: 02.04.2013 CH 697132013
(43) Veröffentlichungstag der Anmeldung: 24.02.2016
(73) Patentinhaber: MP-System GmbH, 6430 Schwyz (CH)
(72) Erfinder: MÜLLER, Gerhard, CH-6440 Brunnen (CH); ABEGG, Hans Peter, CH-8143 Stallikon (CH)
(74) Vertreter: Felber, Josef
(86) Internationale Anmeldenummer: PCT/CH2014/000031
(87) Internationale Veröffentlichungsnummer: WO 2014/161097

(56) Entgegenhaltungen:
- FR-A- 1 390 292
- US-A1- 2006 042 878
- US-A1- 2012 024 330
- US-A1- 2012 286 486

## Beschreibung

Diese Erfindung betrifft eine Vorrichtung, um Objekte, vorzugsweise solche, die man nicht von Hand anzuheben vermag, und vor allem nicht alleine von Hand zu heben vermag, mit Leichtigkeit anzuheben und zu verschieben. Es gibt viele praktische Fälle in Haushalten, in Spitälern, Heimen, in Bürogebäuden, in Hotels etc., wo ein relativ schweres Objekt verschoben werden sollte, etwa um für die Reinigung oder für eine Reparatur eine Stelle zugänglich zu machen, oder einfach um dieses Objekt woanders zu platzieren. Als Beispiele für solche Objekte können angegeben werden, als nicht abschliessende Aufzählung: Klaviere, Tresore, Blumentöpfe, Blumentröge, Blumenkisten, Sonnenschirmständer, Möbelstücke, etc.

Bisher wird in solchen Fällen auf die Mithilfe von weiteren Personen zugegriffen. Zu zweit oder zu dritt oder viert lässt sich oft Abhilfe schaffen. Es gibt aber auch Objekte, die sehr schwer ergreifbar und anhebbar sind, etwa ein Tresor, aber auch ein runder grosser Blumentopf mit einem Baum oder einer grossen Pflanze darin. Im Stand der Technik offenbart die US 2006/042878 A1 eine pneumatische Hebeanlage und Methode für das Heben von Gegenständen, namentlich auch von Pflanztöpfen und Übertöpfen. Sie besteht aus einer Auflagefläche als Stützfläche mit einem Unterbau, in den ein Hohlraum eingebaut ist. Darin befindet sich eine Hebeplattform, welche mit den Wänden des Unterbaus einen Raum einschliesst, der ein Luftkissen oder einen biegsamen Containersack beherbergt, welche bei Bedarf über ein Ventil pneumatisch oder hydraulisch aufgeblasen werden können, etwa mit einer herkömmlichen Fahrradpumpe. An der Unterseite der Hebeplatte angeordnet sind Fahrrollen, die im aufgepumpten Zustand des Kissens oder des Sacks am Boden aufliegen und die Auflagefläche anheben, sodass darauf liegende Objekte beliebig verschoben werden können. Nach dem Verschieben eines Objektes wird die Luft oder das Fluid abgelassen, sodass sich der Untersatz mit den Fahrrollen wieder anheben sollte und die Stützfläche erneut auf dem Boden aufliegt. Diese Vorrichtung ist als kreisrunder Untersatz in Form einer Schüssel ausgeführt, in welchen ein Pflanztopf hineingestellt werden kann. Das Kissen ist ähnlich gestaltet wie ein Fahrradschlauch. Beim Ablassen der Luft ist die Rückstellkraft des Schlauches von der Elastizität des Schlauchmaterials abhängig, welches die Gewichtskraft der Untersätze samt den Rädern überkompensieren muss. Aufgrund der Auslegung sind wohl nur begrenzte Hebekräfte erzeugbar und auch die seitliche Stabilität wird kaum optimal sein, und die Vorrichtung ist nicht besonders niedrig gebaut und lässt sich kaum in jedes Gefäss von unten her einbauen. Die FR 1 390 292 zeigt eine hydraulische Hebevorrichtung, welche zur Ausrüstung von Objekten dient, zu deren Anheben und Verschieben. Es sind hydraulische Kolben-Zylindereinheiten in einen Kasten eingebaut, welche mittels einer Hydraulikflüssigkeit unter Druck ausfahrbar sind, sodass die Räder nach unten ausfahren und das Objekt anheben. Und die US 2012/0286486 A1 zeigt einen Behältersockel mit mechanisch radial ausfahrbaren oder ausschwenkbaren Rädern. Es ist weder eine pneumatische noch hydraulische Hebevorrichtung integriert. Schliesslich zeigt die US 2012/0024330 A1 einen Sonnenschirm mit einem Sockel, in welchen ein Fahrwerk integriert ist. Die Räder sind mechanisch ausschwenkbar, sodass der Sockel vom Boden abgehoben wird und dann fahrbar ist. Zum Anheben ist weder eine pneumatische noch hydraulische Hebevorrichtung integriert.

Die Aufgabe der vorliegenden Erfindung ist es, eine pneumatisch wirkende Vorrichtung zu schaffen, mit welcher das Anheben und Verschieben von Objekten auf ausfahrbaren Rändern stark erleichtert wird. Im Besonderen ist es die Aufgabe der Erfindung, das Anheben und Verschieben von nicht von einer Einzelperson von Hand hebbaren Objekten stark zu erleichtern. Dabei soll die Hebekraft bezogen auf die Grundfläche des Objektes besonders gross sein und die Konstruktion soll eine hohe seitliche Stabilität des Objektes im angehobenen Zustand sicherstellen. Weiter soll die Vorrichtung so konstruiert sein, dass beim Ablassen der Luft die ausfahrbaren Räder zuverlässig einschwenken und komplett über die Auflagefläche des Objektes hochgefahren werde, sodass das Objekt satt mit seiner Auflagefläche auf dem Boden aufliegt. Die Konstruktion soll kostengünstig herstellbar, narrensicher funktionieren, sowie platzsparend in verschiedenste Objekte einbaubar oder integrierbar sein.

Diese Aufgabe wird gelöst von einer Vorrichtung zum Anheben und Verschieben von Objekten, mit einer pneumatische Hebeeinrichtung und mit einer zugehörigen Handpumpe und Ventil zum temporären Ausfahren der Räder nach unten, sodass das Objekt anhebbar und anschliessend auf den Rädern rollbar ist, und die sich durch die kennzeichnenden Merkmale des Anspruchs 1 auszeichnet.

In den Figuren wird diese Vorrichtung in mehreren Ansichten dargestellt und nachfolgend wird ihr Aufbau und ihre Funktion beschrieben und ihr Einsatz erklärt.

Es zeigt:
- Figur 1:: Den Boden eines auszurüstenden Objektes von oben gesehen mit dem kastenartigen Unterbau;
- Figur 2:: Die einzelnen Elemente der Vorrichtung separat dargestellt, in gestürzter Lage;
- Figur 3:: Die Vorrichtung in gestürzter Lage mit ausgefahrenen Rädern;
- Figur 4:: Die Vorrichtung in gestürzter Lage mit eingefahrenen Rädern;
- Figur 5:: Eine Vorrichtung mit hydraulischer Hebevorrichtung für das Ausfahren der Räder;
- Figur 6:: Ein Objekt mit eingefahrenen Rädern;
- Figur 7:: Ein Objekt mit ausgefahrenen Rädern.

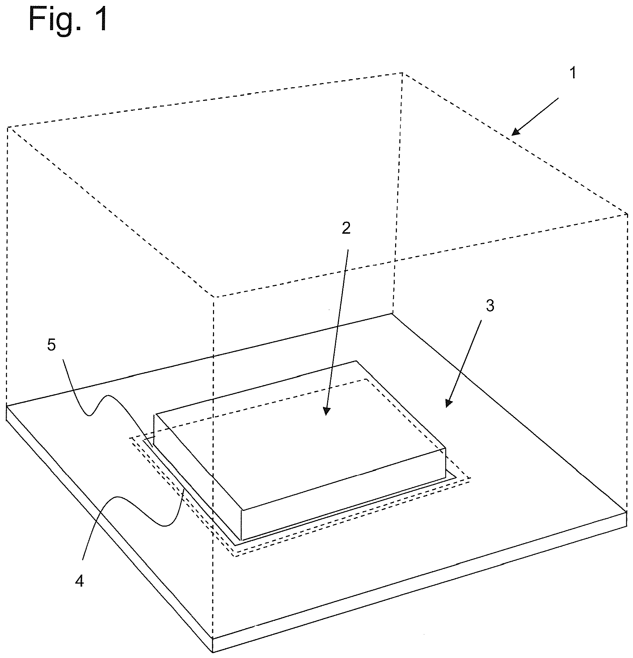

In Figur 1 ist die Vorrichtung in einer Ansicht auf eines mit der Vorrichtung ausgerüsteten Objektes 1 zu sehen, wobei der obere Teil des Objektes 1 strichliniert dargestellt ist. Im Boden 3 oder der Bodenplatte des Objektes 1 ist eine rechteckige Ausnehmung 4 ausgeschnitten. Von unten ist die erfindungsgemässe Vorrichtung in Form eines kastenartiger Einsatz 2 in diese Ausnehmung 4 eingesetzt, welcher unten offen ist und dort eine nach aussen gerichtete Auskragung 5 aufweist. Den äusseren Rand dieser Auskragung 5 sieht man hier strichliniert eingezeichnet. Auf dieser Auskragung 5 liegt der Boden 3 des Objektes 1 auf. Dieser Rand nimmt die Last des Objektes 1 auf, wenn die Vorrichtung mit dem Objekt angehoben wird.

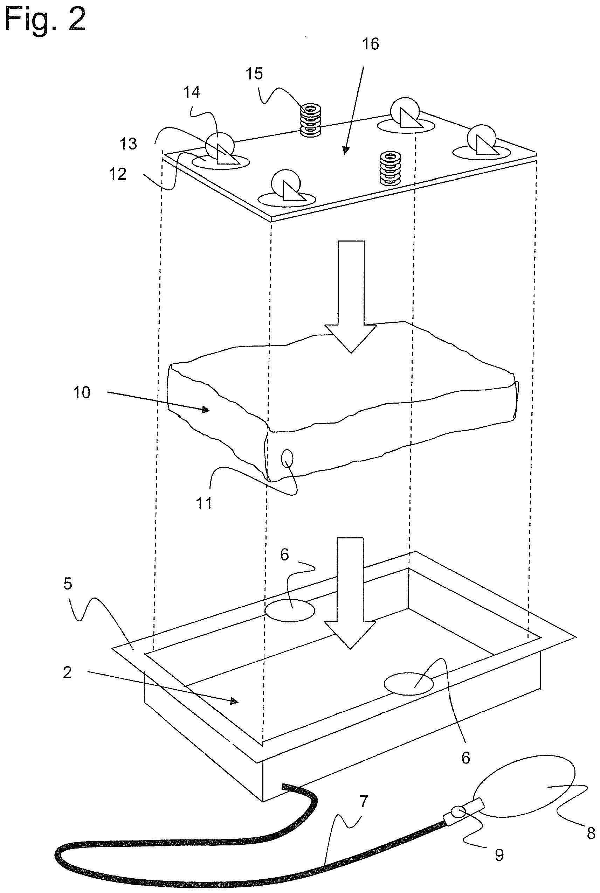

Das Innere des kastenartigen Einsatzes 2 der Vorrichtung erschliesst sich aus Figur 2, wo dieser Einsatz 2 in gestürzter Lage dargestellt ist, und die einzelnen Elemente werden in einer Explosionszeichnung separat dargestellt sind. Der Einsatz 2 besteht hier aus einem Blechkasten mit Auskragung 5 an seinem oberen Rand. In der Mitte der Längsseiten sind gegen innen auskragende Stützplatten 6 angebracht, deren Zweck noch erläutert wird. Weiter gehört zur Vorrichtung ein pneumatisch aufblasbares Kissen 10, welches in das Innere des kastenartigen Einsatzes 2 passt, und das mit einem Anschluss 11 für einen Pneumatikschlauch ausgerüstet ist. Auf dieses Kissen 10 kommt eine Blechplatte 16 zu liegen, die hier weiter oben dargestellt ist, und welche im gezeigten Beispiel mit vier freigelenkten Rädern 14 ausgerüstet ist. Mindestens drei Räder 14 sind nötig, und drei Räder sind dann vorteilhaft, wenn die anzuhebende Last nicht allzu hoch ist. Dan gewähren drei Räder den besten Stand. Es können indessen auch mehr als drei oder vier Räder vorgesehen werden. Die Drehscheiben 12 sind kugelgelagert auf dieser Blechplatte 16 gelagert, sodass sie sich auch unter Last leicht drehen lassen. Auf den Drehscheiben 12 sind die Fahrgestelle 13 der Räder 14 befestigt, an welchen schliesslich die Räder 14 drehbar gelagert sind. Die Räder 14 sind vorzugsweise Kunststoffräder mit einer mehrere Zentimeter breiten Lauffläche, um die Last des Objektes 1 auf eine hinreichende Lauffläche zu verteilen, sodass der Boden, über den die Last mit ihnen gerollt wird, keinen Schaden nimmt. Anstelle von Kunststoff-Rädern können auch Stahlräder mit einer gummierten oder aus Kunststoff gefertigten Lauffläche in Frage kommen, oder Stahlräder mit Vollgummireifen. Zwischen den Rädern 14 sind Druckfedern 15 auf der Blechplatte 16 angeordnet. Im gezeigten Beispiel ist je eine an den Rändern der Längsseiten des rechteckigen Blechplatte 16 angeordnet. Solche Druckfedern 15 sind vorteilhaft in gleicher Weise auch in der Mitte der Breitseiten der Blechplatte 16 angeordnet. Diese Elemente, das heisst Blechplatte 16 mit den Rädern, Luftkissen 10 und kastenartiger Einsatz werden gemäss den eingezeichneten Pfeilen zusammengesetzt. Das Kissen 10 kommt in das Innere des kastenartigen Einsatzes 2 zu liegen, und dann kommt die Blechplatte 16 darauf zu liegen, wobei die auskragenden Stützplatten 6 schliesslich auf der Oberseite der Druckfedern 15 zu liegen kommen, sodass diese zwischen der Blechplatte 16 und dem kastenartigen Einsatz 2 wirken, und zwar in dem Sinne, dass die Blechplatte 16 in den kastenartigen Einsatz 2 hineingedrückt wird, unter Zusammendrücken des Kissens 10. Das Kissen 10 ist mittels einer Handpumpe 8, hier in Form eines Balges, über den Pneumatikschlauch 7 aufblasbar. Ein Ventil 9 sorgt dafür, dass die Luft für das Pumpen von aussen in den Balg gelangt, und beim Pumpen durch das dann als Einwegventil wirkende Ventil in den Luftschlauch 7 gelangt. Die gepumpte Luft kann nur vom Balg in den Pneumatikschlauch 7 strömen und von diesem ins Kissen 10 gelangen. Nur bei Betätigung eines Druckknopfes am Ventil 9 wird das Ventil geöffnet, und dann kann die gepumpte Luft aus dem Kissen 10 durch den Pneumatikschlauch 7 und das Ventil 9 nach aussen entweichen.

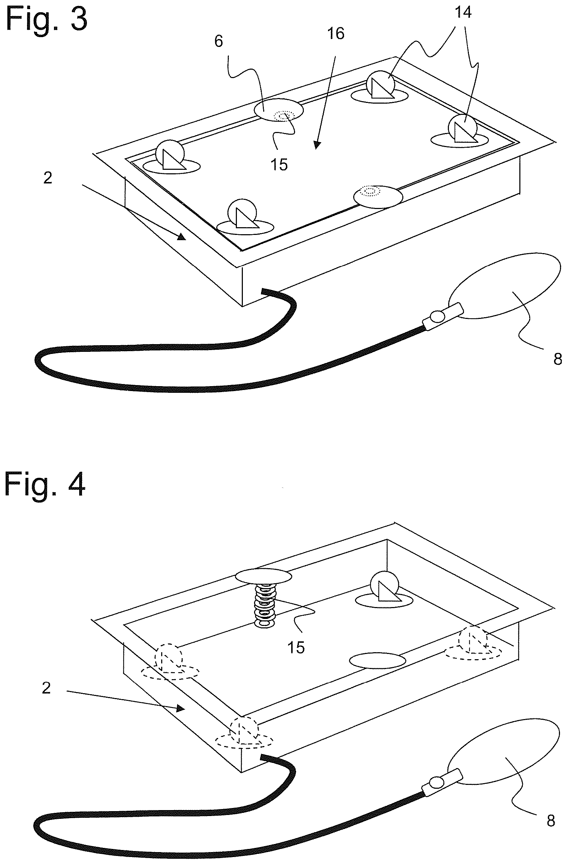

Die Figur 3 zeigt die Vorrichtung mit dem aufgepumpten, in dieser Darstellung nicht einsehbaren Kissen im Innern des kastenartigen Einsatzes 2. Die Blechplatte 16 mit ihren vier Rädern 14 ist jetzt ganz nach aussen gedrückt, was gegen die Kraft der Druckfedern 15 erfolgt, und natürlich gegen die zu hebende Last, wenn der Einsatz 2 an einem zu hebenden Objekt 1 eingebaut ist. Die Blechplatte 16 findet an den Stützplatten 6 einen Anschlag. Es können bedarfsweise weitere und stärkere Anschläge montiert sein, etwa indem um den Rand des kastenartigen Einsatzes 2 überall Flachstähle oder gar Profile aufgeschweisst oder aufgeschraubt sind, welche in die lichte Öffnung des kastenartigen Einsatzes 2 ragen oder sich über ganz über diese lichte Öffnung des Kastens auf die jeweils andere Seite erstrecken. Je nach dem wirken erhebliche Kräfte, und das Kissen mit der Blechplatte 16 hebt Lasten von je nach Ausführung 50kg bis 500kg.

In Figur 4 ist die Situation dargestellt, wenn das Kissen 10 entleert wurde, also ein Objekt abgesenkt wurde. Das erfolgt durch Öffnen des Ventils 9 an der Pumpe. Die Druckfedern 15 drücken dann die Blechplatte 16 in das Innere des kastenförmigen Einsatzes 2 und dabei wird das Kissen 10 zusammengedrückt und die Luft wird aus ihm hinausgepresst. Die Räder 14 sind in diesem Zustand soweit in den kasteninneren Einsatz 2 abgesenkt, dass sie nicht mehr aus diesem herausragen.

Dieser Einsatz wie in den Figuren 2 bis 4 gezeigt wird in um 180° umgekehrter Lage als in den Figur 2 bis 4 gezeigt, nämlich so wie in Figur 1 gezeigt, in den Boden eines Objektes 1 eingebaut. Ein solches Objekt kann eine Blumenkiste oder ein grosser Blumentopf sein, oder jegliches andere Objekt, welches nicht einfach von einer Einzelperson leicht anhebbar und verschiebbar ist. Das kann etwa ein Klavier sein, oder ein Tresor, oder Möbelstücke irgendwelcher Art, die ab und zu verschoben werden sollten. Dann lohnt sich der Einbau einer solchen Vorrichtung. Gerade bei grossen Blumentöpfen und Pflanzenkasten ist der Einbau der Vorrichtung sehr sinnvoll, denn diese müssen ab und zu verschoben werden, um für die Reinigung an die Ecken und Bereiche hinter denselben heranzukommen. In Heimen, Spitälern, Bürohäusern etc. sind solche schweren Blumentöpfe und Pflanzenkasten für das Reinigungspersonal regelmässig eine Herausforderung. Weil sie kaum verschoben werden können, wird die Reinigung in den Bereichen darunter und dahinter oftmals unterlassen.

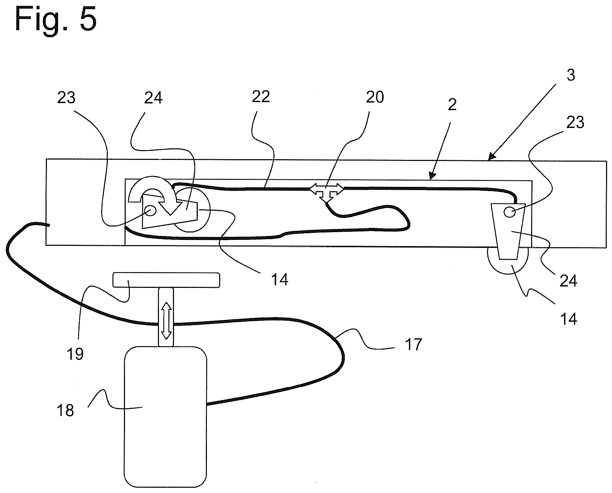

Die Figur 5 zeigt eine alternative Ausführung für das Ausfahren der Räder. Diese können nach der Erfindung nicht nur linear ausgefahren werden, sondern es ist auch ein Ausfahren im Sine eines Ausschwenkens möglich. Hierzu sind die Räder 14 im kastenartigen Einsatz 2 schwenkbar gelagert, indem sie schwenkbare Fahrgestelle 24 aufweisen. Diese Fahrgestelle 24 ihrerseits können sowohl an festen Achsen 23 gelagert sein, die also stationär zum kastenartigen Einsatz verbaut sind, oder aber diese Achsen 23 können ihrerseits auf Drehscheiben aufgebaut sind, die kugelgelagert um eine Hochachse in Bezug auf den kastenartigen Einsatz drehbar sind, und somit bei ausgeschwenkten Rädern 14 dieselben freilenkend machen. Das Ausschwenken wie mit dem Pfeil angedeutet geschieht hier mittels einer Hydraulik. Ein Hydraulikschlauch 17 führt ab einer Hydraulikpumpe 18 mit Hydraulikölspeicher, die nach Art einer Fahrradpumpe mit einem Handgriff 19 funktioniert, zum Mehrwegventil im Innern des kastenartigen Einsatzes 2. Ab dem Mehrwegventil 20 strömt das Hydrauliköl zu jedem Fahrgestell 24, wo je eine hydraulische Kolben-Zylindereinheit den Hydraulikdruck in eine mechanische Kraft zur Schwenkung der Fahrgestelle 24 mit den Rädern 14 um die Fahrgestellachsen 23 umsetzt. Die Hydraulikpumpe 18 ist mit entsprechenden Einweg- und Sperrventilen ausgerüstet, damit die ausgeschwenkten Fahrgestelle 24 in ihrer ausgefahrenen Lage festgehalten sind. Zum Absenken der Last wird das Ventil in der Hydraulikpumpe 18 für eine umgekehrte Strömungsrichtung umgestellt, und durch das Pumpen wird dann das Hydrauliköl in den Hydraulikölspeicher der Hydraulikpumpe 18 zurückgefördert, unter Einschwenken der Räder 14 und Absenken des Objektes 1.

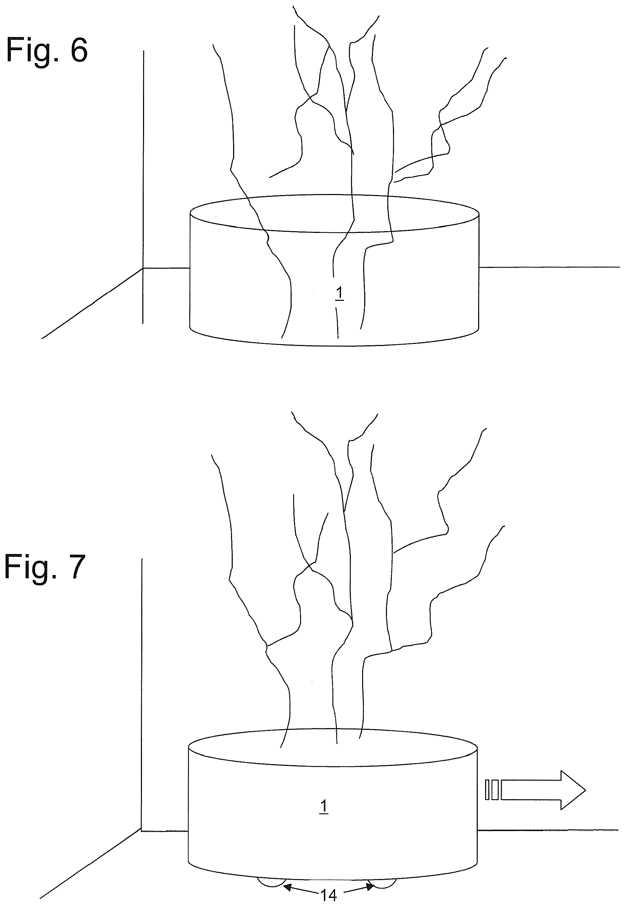

Figur 6 zeigt einen solchen Pflanzenkasten als Objekt 1, wie er in der Ecke eines Zimmers abgestellt ist. Weil er ja mit Pflanzenerde gefüllt ist, ist er sehr schwer und daher nur schwer verschiebbar. Mit der in seinem Boden eingebauten Vorrichtung kann nun einfach die Handpumpe betätigt werden, worauf die Räder der Vorrichtung nach unten pneumatisch ausfahren oder hydraulisch betätigt ausschwenken und den ganzen Pflanzenkasten anheben, wie das in Figur 7 dargestellt ist. Nun kann der Pflanzenkasten ganz leicht auf diesen Rädern 14 verschoben werden und hernach wieder zurückgerollt oder an einem neuen Standort durch Entlüften des Kissens abgesenkt werden.

Bei grossen runden Pflanztöpfen ist es vorteilhaft, wenn der kastenförmige Einsatz kreisrund ausgeführt ist, und entsprechend auch die Blechplatte 16 mit den freigelenkten Rädern 14 darauf. Ebenso wird dann auch das Kissen 10 vorteilhaft kreisrund ausgeführt, wobei aber auch ein andersförmiges seine Wirkung tut. Wenn der Pflanztopf gross und schwer ist, empfiehlt es sich, mehr als bloss drei oder vier Räder 14 einzusetzen. Bei einem kreisrunden Einsatz 2 werden dann vorteilhaft fünf bis zwölf Räder längs der Peripherie der Blechplatte 16 verteilt angeordnet, um eine gute und gleichmässige Abstützung des Objektes zu erzielen.

## Patentansprüche

1. Vorrichtung zum Anheben und Verschieben von Objekten (1), mit einer pneumatische Hebeeinrichtung durch ein Luftkissen (10) mit Anschluss (11) und mit einer zugehörigen Handpumpe (8,18) und Ventil (9) zum temporären Ausfahren von Rädern (14) nach unten, sodass das Objekt (1) anhebbar und anschliessend auf den Rädern (14) rollbar ist, ***dadurch gekennzeichnet,***
**dass** sie einen Einsatz (2) in Form eines Blechkastens mit auskragendem Rand (5) bildet, welcher in gestürzter Lage, das heisst mit auskragendem Rand (5) unten, von unten in eine Ausnehmung in der Unterseite (3) des anzuhebenden Objektes (1) einsetzbar ist oder an der Unterseite (3) befestigbar ist, wobei in diesen Blechkasten hinein auf seine Grundfläche passend das Luftkissen (10) mit Anschluss (11) eingelegt ist, und an diesem Luftkissen (10) eine Blechplatte (16) anliegt, die an der dem Luftkissen (10) abgewandten Seite mit mindestens drei Rädern (14) ausgerüstet ist, und wobei die Blechplatte (16) im Blechkasten längs der Kasten-Seitenwände auf und ab verschiebbar ist, und dass zwischen dem kastenartigen Einsatz (2) und der Blechplatte (16) Druckfedern (15) eingebaut sind, die senkrecht auf die Blechplatte (16) wirksam sind, und die durch Aufpumpen des Luftkissens (10) zusammendrückbar sind, sodass beim Entlasten des Luftkissens (10) infolge Federkraft durch Entspannen dieser Druckfedern (15) die Blechplatte (16) vom Rand (5) des kastenartigen Einsatzes (2) wegdrückbar ist, wodurch die Räder (14) des Fahrwerks komplett über den unteren Rand (2) des kastenartigen Einsatzes (2) hinaus nach oben einziehbar sind.

2. Vorrichtung nach Anspruch 1, ***dadurch gekennzeichnet,* dass** das Luftkissen (10) im Blechkasten deckungsgleich mit der inneren Grundfläche des Blechkastens ausgeführt ist und die Blechplatte (16) deckungsgleich auf dem Luftkissen (10) aufliegt, zur Erzeugung einer maximalen Kraft auf die Blechplatte (16) infolge des Innendrucks des Luftkissens (10) durch dessen Aufpumpen.

3. Vorrichtung nach einem der vorangehenden Ansprüche, ***dadurch gekennzeichnet*, dass** die Blechplatte (16) auf ihrer gegenüber dem kastenartigen Einsatz äusseren Seite mit vier freigelenkten Rädern (14) ausgerüstet ist, welche über kugelgelagerte Drehscheiben (12) an der Blechplatte (16) gelagert sind.

4. Vorrichtung nach einem der Ansprüche 1 bis 2, ***dadurch gekennzeichnet,* dass** der kastenförmigen Einsatz (2), das Luftkissen (10) und die Blechplatte (16) kreisrund ausgeführt ist, und an der Blechplatte (16) längs ihrer Peripherie mindestens vier freigelenkte Räder (14) verteilt angeordnet sind.

5. Vorrichtung nach einem Ansprüche 1 bis 3, ***dadurch gekennzeichnet,* dass** der kastenförmigen Einsatz (2), das Luftkissen (10) und die Blechplatte (16) kreisrund ausgeführt sind, und an der Blechplatte (16) längs ihrer Peripherie fünf bis zwölf freigelenkte Räder (14) verteilt angeordnet sind.

## Claims

1. Device for lifting and displacing objects (1), having a pneumatic lifting device by means of an air cushion (10) with connection (11) and having an associated hand pump (8, 18) and valve (9) for temporarily extending the wheels (14) downwards, so that the object (1) can be raised and subsequently rolled on the wheels (14),
**characterized**
**in that** it forms an insert (2) in the form of a sheet-metal box with a projecting edge (5), which insert can be inserted from below into a recess in the underside (3) of the object (1) to be lifted or can be fastened to the underside (3) in the fallen position, i.e. with a projecting edge (5) at the bottom, wherein the air cushion (10) with connection (11) is inserted into this sheet-metal box so as to fit onto its base surface, and a sheet-metal plate (16), which is equipped with at least three wheels (14) on the side facing away from the air cushion (10), bears against this air cushion (10), and the sheet metal plate (16) being displaceable up and down in the sheet metal box along the box side walls, and in that compression springs (15) are installed between the box-like insert (2) and the sheet metal plate (16), which compression springs (15) act perpendicularly on the sheet metal plate (16) and can be compressed by inflating the air cushion (10), so that, when the air cushion (10) is relieved as a result of spring force, the sheet metal plate (16) can be pushed away from the edge (5) of the box-like insert (2) by releasing these compression springs (15), as a result of which the wheels (14) of the running gear can be retracted upwards completely beyond the lower edge (2) of the box-like insert (2).

2. Device according to claim 1, **characterized in that** the air cushion (10) in the sheet metal box is designed congruently with the inner base surface of the sheet metal box and the sheet metal plate (16) lies congruently on the air cushion (10), for generating a maximum force on the sheet metal plate (16) as a result of the internal pressure of the air cushion (10) by pumping it up.

3. Device according to one of the preceding claims, **characterized in that** the sheet metal plate (16) is equipped on its outer side, opposite the box-like insert, with four freely steered wheels (14) which are mounted on the sheet metal plate (16) via ball-bearing turntables (12).

4. Device according to one of claims 1 to 2, **characterized in that** the box-shaped insert (2), the air cushion (10) and the sheet metal plate (13) are circular in design, and at least four freely steered wheels (14) are arranged distributed on the sheet metal plate (13) along its periphery.

5. Device according to claims 1 to 3, **characterized in that** the box-shaped insert (2), the air cushion (10) and the sheet metal plate (13) are circular in design, and five to twelve freely steered wheels (14) are arranged distributed on the sheet metal plate (13) along its periphery.

## Revendications

1. Dispositif de levage et de déplacement d'objets (1), comportant un dispositif de levage pneumatique au moyen d'un coussin d'air (10) avec raccord (11) et une pompe manuelle (8, 18) et une soupape (9) associées pour abaisser temporairement les roues (14), de sorte que l'objet (1) puisse être soulevé et ensuite enroulé sur les roues (14),
**caractérisé**
**en ce qu'**il forme un insert (2) sous la forme d'une boîte en tôle avec un bord saillant (5) qui peut être inséré par le bas dans un évidement de la face inférieure (3) de l'objet (1) à soulever ou peut être fixé sur la face inférieure (3) en position couchée, c'est-à-dire avec un bord saillant (5) en bas, dans laquelle le coussin d'air (10) avec raccord (11) est inséré dans cette boîte en tôle de manière à s'adapter sur sa surface de base, et une plaque de tôle (16), qui est équipée d'au moins trois roues (14) sur le côté opposé au coussin d'air (10), est appliquée contre ce coussin d'air (10), et la plaque de tôle (16) pouvant être déplacée vers le haut et vers le bas dans le caisson en tôle le long des parois latérales du caisson, et en ce que des ressorts de compression (15) sont installés entre l'insert en forme de caisson (2) et la plaque de tôle (16), lesquels ressorts de compression (15) agissent perpendiculairement sur la plaque de tôle (16) et peuvent être comprimés en gonflant le coussin d'air (10), de sorte que, lorsque le coussin d'air (10) est dégagé par la force du ressort, la plaque de tôle (16) peut être écartée du bord (5) de l'insert (2) en forme de caisson en libérant ces ressorts de compression (15), ce qui permet aux roues (14) du châssis de rentrer complètement vers le haut au-delà du bord inférieur (2) de l'insert (2).

2. Dispositif selon la revendication 1, **caractérisé en ce que** le coussin d'air (10) dans le caisson en tôle est conçu de manière congruente avec la surface de base intérieure du caisson en tôle et la tôle (16) repose de manière congruente sur le coussin d'air (10), pour générer une force maximale sur la tôle (16) en raison de la pression interne du coussin d'air (10) en le faisant monter.

3. Dispositif selon l'une des revendications précédentes, **caractérisé en ce que** la plaque de tôle (16) est équipée sur son côté extérieur, opposé à l'insert en forme de caisson, de quatre roues (14) à direction libre qui sont montées sur la plaque de tôle (16) par des plateaux tournants (12) à roulement à billes.

4. Dispositif selon l'une des revendications 1 à 2, **caractérisé en ce que** l'insert (2) en forme de caisson, le coussin d'air (10) et la plaque de tôle (13) sont de forme circulaire et au moins quatre roues directrices libres (14) sont disposées sur la plaque de tôle (13) sur sa périphérie.

5. Dispositif selon les revendications 1 à 3, **caractérisé en ce que** l'insert (2) en forme de caisson, le coussin d'air (10) et la plaque de tôle (13) sont de forme circulaire et cinq à douze roues directrices libres (14) sont réparties sur la plaque de tôle (13) sur sa périphérie.
